# EUROPEAN PATENT APPLICATION

(11) **EP 4 401 178 A1**
(43) Date of publication of application: **17.07.2024**
(21) Application number: 22867085.7
(22) Date of filing: 15.07.2022
(51) Int. Cl.: H01M 10/04, H01M 4/04, H01M 4/13, H01M 4/139, H01M 10/0525, H01M 10/0587, H01M 50/533, H01M 50/536, H01M 50/548

(54) **BATTERY MANUFACTURING METHOD AND BATTERY**

(30) Priority: 09.09.2021 JP 2021147084
(71) Applicant: Panasonic Holdings Corporation, Osaka 571-8501 (JP); Panasonic Energy Co., Ltd., Osaka 570-8511 (JP)
(72) Inventor: HIROSE Takayuki, Kadoma-shi, Osaka 571-0057 (JP); UEGAKI Shunsuke, Kadoma-shi, Osaka 571-0057 (JP); OKIMOTO Ryota, Kadoma-shi, Osaka 571-0057 (JP)
(74) Representative: Novagraaf International SA
(86) International application number: PCT/JP2022/027847
(87) International publication number: WO 2023/037763

(57) **Abstract**

This battery manufacturing method includes: preparation of a wound-type electrode group 2 formed by laminating and winding separators and electrode plates such that the electrode group 2 has recessed parts 70 in first regions R1, which continue from an inner edge at one end in an axial direction E, electrode plates being shorter at the recessed parts 70 than in second regions R2 positioned on the outer side of the first regions R1; bending of end parts of the electrode plates in the second regions R2 in a radial direction B of the electrode group 2; joining of the bent end parts with a collector plate; insertion of the electrode group 2 joined with the collector plate into an exterior can 4 so that the collector plate and a bottom surface of the exterior can 4 face each other; insertion of a press jig 72 into a center space of the electrode group 2; and pressing of the collector plate against the bottom surface to join the collector plate with the exterior can 4.

## Description

### TECHNICAL FIELD

The present invention relates to a method of manufacturing batteries and to batteries.

### BACKGROUND ART

Conventionally, a battery in which a winding electrode group and an electrolytic solution are housed in a cylindrical outer can is known. In connection with such a battery, PATENT LITERATURE 1 discloses a method of bending the end of the electrode group to form a flat welding surface and welding the welding surface and the current collector plate.

### RELATED-ART LITERATURE

### PATENT LITERATURE

PATENT LITERATURE 1: JP2000-323117

### SUMMARY OF INVENTION

### TECHNICAL PROBLEM

When the end of an electrode group is bent as in PATENT LITERATURE 1, the bent end of the electrode plate can hinder the execution of the battery manufacturing process depending on the method for manufacturing the battery. If the execution of the battery manufacturing process is hindered, it can lead to a deterioration in the quality of the battery obtained.

The present disclosure addresses the issue described above, and a purpose thereof is to provide a technology for improving the quality of batteries.

### SOLUTION TO PROBLEM

An embodiment of the present disclosure relates to a method of manufacturing a battery. The method includes: preparing an electrode group having a winding structure in which a separator and an electrode plate are stacked and wound, the electrode group having, in a first region continuous from an inner edge at one end of the electrode group in an axial direction, a recess in which the electrode plate is shorter than in a second region located more toward an outer edge than the first region; bending an end of the electrode plate in the second region in a radial direction of the electrode group and joining the bent end to a current collector plate; inserting the electrode group joined to the current collector plate into an outer can and causing the current collector plate and a bottom surface of the outer can to face each other; and inserting a pressing tool into a central space of the electrode group and pressing the current collector plate against the bottom surface to join the current collector plate to the outer can.

Another embodiment of the present disclosure relates to a battery. The battery includes: an electrode group having a winding structure in which a separator and an electrode plate are stacked and wound; and a current collector plate. The electrode group has, in a first region continuous from an inner edge at one end of the electrode group in an axial direction, a recess in which the electrode plate is shorter than in a second region located more toward an outer edge than the first region, an end of the electrode plate in the second region is bent in a radial direction of the electrode group, and the bent end is joined to the current collector plate.

Optional combinations of the aforementioned constituting elements, and implementations of the disclosure in the form of methods, apparatuses, and systems may also be practiced as additional aspects of the present disclosure.

### ADVANTAGEOUS EFFECTS OF INVENTION

According to the present disclosure, the quality of batteries can be improved.

### BRIEF DESCRIPTION OF DRAWINGS

FIG. 1 is a cross-sectional view of a battery.
FIG. 2A shows a step of forming the electrode group.
FIG. 2B shows a step of joining the electrode group and the second current collector plate.
FIG. 3 is a plan view showing the first electrode plate before it is wound.
FIG. 4A shows a step of joining the second current collector plate and the outer can.
FIG. 4B shows a step of joining the electrode group and the first current collector plate.

### DESCRIPTION OF EMBODIMENTS

Hereinafter, the present disclosure will be described based on preferred embodiments with reference to drawings. The embodiments do not limit the scope of the present disclosure but exemplify the disclosure. Not all of the features and the combinations thereof described in the embodiments are necessarily essential to the present disclosure. Identical or like constituting elements, members, processes shown in the drawings are represented by identical symbols and a duplicate description will be omitted as appropriate. The scales and shapes shown in the figures are defined for convenience's sake to make the explanation easy and shall not be interpreted limitatively unless otherwise specified. Terms like "first", "second", etc. used in the specification and claims do not indicate an order or importance by any means unless otherwise specified and are used to distinguish a certain feature from the others. Those of the members that are not material to the description of the embodiments are omitted in the drawings.

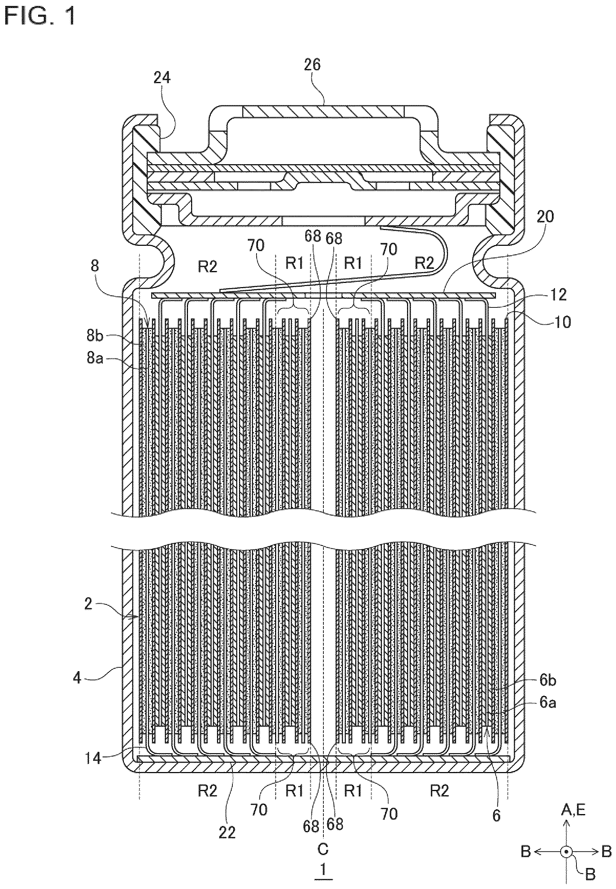

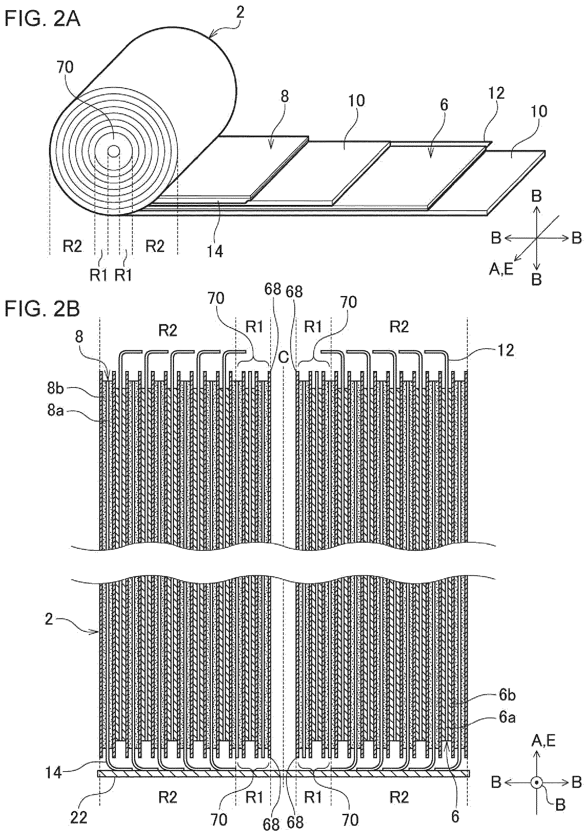

FIG. 1 is a cross-sectional view of a battery 1. The battery 1 is, for example, a rechargeable secondary battery such as a lithium ion battery, a nickel-metal hydride battery, and a nickel-cadmium battery. The battery 1 by way of one example has a structure in which the electrode group 2 is stored in an outer can 4 along with a electrolytic solution (not shown). The electrode group 2 is cylindrical in shape by way of one example and has a winding structure in which a belt-like first electrode plate 6 and a belt-like second electrode plate 8 are stacked, sandwiching a belt-like separator 10, and are wound in a spiral shape (see also FIG. 2A). In this embodiment, the first electrode plate 6 is the positive electrode plate and the second electrode plate 8 is the negative electrode plate, but the polarity of the first electrode plate 6 and the second electrode plate 8 may be reversed. The separator 10 is formed by a microporous film made of, by way of one example, a polypropylene resin or the like.

The first electrode plate 6 has a structure in which an electrode active material layer 6b is stacked on a current collector 6a. Similarly, the second electrode plate 8 has a structure in which an electrode active material layer 8b is stacked on a current collector 8a. In the case of a general lithium ion secondary battery, the current collector 6a, 8a is comprised of an aluminum foil or the like when it is a positive electrode and is comprised of a copper foil or the like when it is a negative electrode. The electrode active material layer 6b, 8b can be formed by applying an electrode mixture material to the surface of the current collector 6a, 8a by a known coating apparatus and drying and rolling the material. The electrode mixture material is obtained by kneading materials including an electrode active material, a binder, a conductive material, etc. in a dispersion medium and uniformly dispersing the materials. In the case of a general lithium ion secondary battery, the electrode active material is lithium cobalt oxide, lithium iron phosphate, or the like when it is a positive electrode and is graphite or the like when it is a negative electrode.

The first electrode plate 6 has a first uncoated portion 12 that is not coated with an electrode mixture material at the end on one side in the width direction A. The width direction A is a direction that intersects the longitudinal direction of the belt and is a direction in which center of winding C of the electrode group 2 extends, i.e., the same direction as the axial direction E of the electrode group 2. The first uncoated portion 12 is an exposed portion in the current collector 6a where the electrode active material layer 6b is not stacked. Further, the second electrode plate 8 has a second uncoated portion 14 not coated with an electrode mixture material at the end on the other side in the width direction A (the axial direction E), i.e., at the end opposite to the side where the first uncoated portion 12 protrudes. The second uncoated portion 14 is an exposed portion in the current collector 8a where the electrode active material layer 8b is not stacked.

As described above, the electrode group 2 has a structure in which the first electrode plate 6 and the second electrode plate 8 are wound. For this reason, a plurality of ends of the first electrode plate 6 and the second electrode plate 8 in the width direction A are arranged in the radial direction B of the electrode group 2. Therefore, the electrode group 2 includes a plurality of first uncoated portions 12 arranged in the radial direction B and a plurality of second uncoated portions 14 arranged in the radial direction B.

The electrode group 2 has, in a first region R1 continuous from an inner edge 68 at one end (the end that faces the bottom side of the outer can 4) of the electrode group 2 in the axial direction E, a recess 70 in which the second electrode plate 8 is shorter than in a second region R2 located more toward the outer edge than the first region R1. Specifically, the length of the current collector 8a (the second uncoated portion 14) of the second electrode plate 8 located in the first region R1 is shorter than the current collector 8a of the second electrode plate 8 located in the second region R2. The end of the second electrode plate 8 in the second region R2 is bent in the radial direction B of the electrode group 2. In this embodiment, the end of each second electrode plate 8 is bent toward the center of winding C. By way of one example, the second electrode plate 8 in the second region R2 is bent in the radial direction B at predetermined intervals in the circumferential direction of the electrode group 2.

Further, the electrode group 2 has, in a first region R1 continuous from the inner edge 68 at the other end (the end that faces the opening of the outer can 4) of the electrode group 2 in the axial direction E, a recess 70 in which the first electrode plate 6 is shorter than in the second region R2 located more toward the outer edge than the first region R1. Specifically, the length of the current collector 6a (the first uncoated portion 12) of the first electrode plate 6 located in the first region R1 is shorter than the current collector 6a of the first electrode plate 6 located in the second region R2. The end of the first electrode plate 6 in the second region R2 is bent in the radial direction B of the electrode group 2. In this embodiment, the end of each first electrode plate 6 is bent toward the center of winding C. By way of one example, the first electrode plate 6 in the second region R2 is bent in the radial direction B at predetermined intervals in the circumferential direction of the electrode group 2. It should be noted that the electrode group 2 may have a recess 70 at least at the end thereof that faces the bottom of the outer can 4.

A first current collector plate 20 is provided on the side where the first uncoated portion 12 in the electrode group 2 protrudes. The first current collector plate 20 is made of, for example, aluminum or the like. The ends of the plurality of first electrode plates 6 bent in the second region R2 are placed in surface contact with the first current collector plate 20. By bending the end of each first electrode plate 6, the contact area between each first electrode plate 6 and the first current collector plate 20 increases. Each first electrode plate 6 and the first current collector plate 20 are joined to each other by laser welding, etc. Thereby, the first electrode plate 6 and the first current collector plate 20 are electrically connected.

A second current collector plate 22 is provided on the side where the second uncoated portion 14 in the electrode group 2 protrudes. The second current collector plate 22 is made of, for example, copper, nickel, nickel-plated copper, nickel-plated iron, and the like. The ends of the plurality of second electrode plates 8 bent in the second region R2 are in surface contact with the second current collector plate 22. By bending the end of each second electrode plate 8, the contact area between each second electrode plate 8 and the second current collector plate 22 increases. Each second electrode plate 8 and the second current collector plate 22 are joined to each other by laser welding, etc. Thereby, the second electrode plate 8 and the second current collector plate 22 are electrically connected.

The electrode group 2 is stored in the bottomed cylindrical outer can 4 along with the electrolytic solution. The outer can 4 is made of, for example, copper, nickel, iron, an alloy thereof, or the like. The second current collector plate 22 joined to the electrode group 2 is joined to the inner bottom surface of the outer can 4 by welding or the like. The first current collector plate 20 joined to the electrode group 2 is joined to a sealing plate 26 made of the same metal as the outer can 4 by welding or the like. The sealing plate 26 is fitted into the opening of the outer can 4 via an insulating gasket 24. Thereby, the electrode group 2 and the electrolytic solution are sealed in the outer can 4.

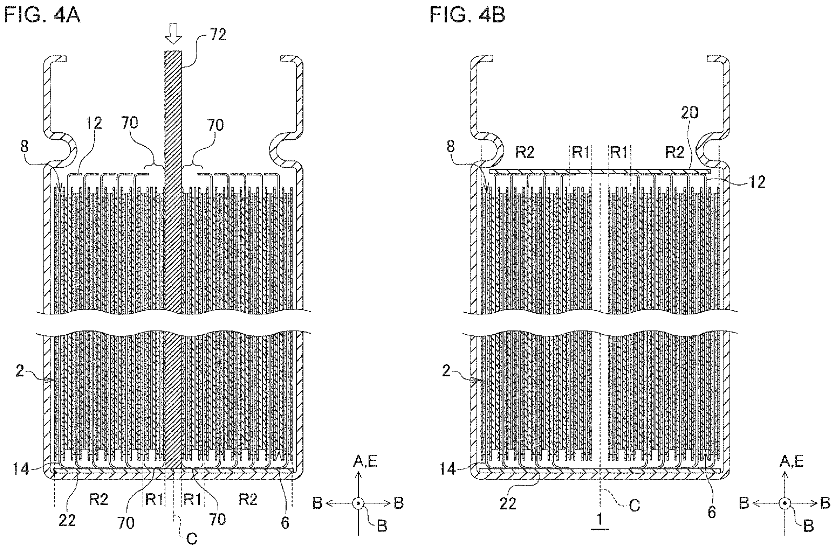

A description will now be given of a method of manufacturing the battery 1 in further detail. FIG. 2A shows a step of forming the electrode group 2. FIG. 2B shows a step of joining the electrode group 2 and the second current collector plate 22. FIG. 4A shows a step of joining the second current collector plate 22 and the outer can 4. FIG. 4B shows a step of joining the electrode group 2 and the first current collector plate 20.

First, as shown in FIG. 2A, the first electrode plate 6, the second electrode plate 8, and the separators 10, which are belt-like, are prepared. Then, the separator 10, the first electrode plate 6, the separator 10, and the second electrode plate 8 are stacked in this order. The stacked product thus obtained is wound in a spiral shape to form the winding electrode group 2. In this process, the first electrode plate 6 and the second electrode plate 8, in which the ends corresponding to the recess 70 are cut in advance, and the separator 10 are wound to form the electrode group 2. That is, each electrode plate has a notch at the end in the width direction A over a predetermined range corresponding to the first region R1, starting at the end in the longitudinal direction of the belt where the winding starts.

Thereby, the electrode group 2 having the recess 70 in the first region R1 at the end in the axial direction E can be obtained simply by winding each electrode plate and the separator 10. The end of each electrode plate in the first region R1 may be removed to form the recess 70 after winding each electrode plate and the separator 10. However, removing the end before winding makes processing easier and makes it possible to avoid the risk of chips or the like being mixed into the electrode group 2.

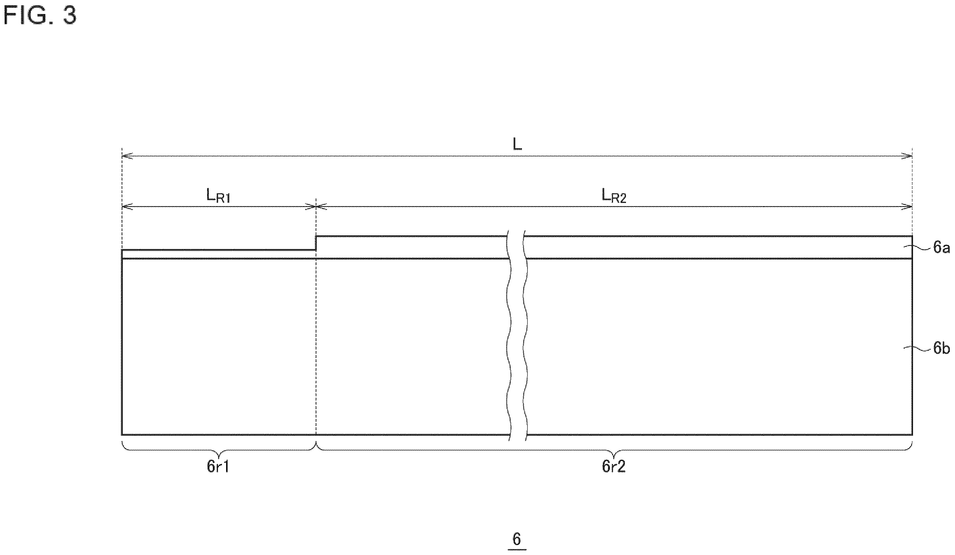

The pre-winding configuration of the first electrode plate 6 and the second electrode plate 8 will be described with reference also to FIG. 3. FIG. 3 is a plan view showing the first electrode plate 6 before it is wound. The vertical direction of FIG. 3 corresponds to the width direction A described so far. In the first electrode plate 6 that is not wound yet, the current collector 6a is exposed from one end of the electrode active material layer 6b formed in a belt-like shape in the width direction. Further, the first electrode plate 6 includes a first region portion 6r1 included in the first region R1 when the first electrode plate 6 is wound and a second region portion 6r2 included in the second region R2 when the first electrode plate 6 is wound. The length of the first electrode plate 6 in the width direction in the first region portion 6r1 is shorter than the length of the first electrode plate 6 in the width direction in the second region portion 6r2.

Further, the length of the first electrode plate 6 in the longitudinal direction of the belt is denoted by L, the length of the first region portion 6r1 of the first electrode plate 6 in the longitudinal direction of the belt is denoted by L_{R1}, and the length of the second region portion 6r2 of the first electrode plate 6 in the longitudinal direction of the belt is denoted by L_{R2}. L_{R1} is preferably 15% or less of L and, more preferably 10% or less of L. This suppresses the risk of electrical connection between the electrode plate and the current collector plate becoming insufficient. The second electrode plate 8 also has the same configuration as the first electrode plate 6. Reference is mad back to FIG. 2A.

The recess 70 is formed by cutting the exposed portions of the current collectors 6a, 8a in each electrode plate. In this process, it is preferable to remove the exposed portion so that a part of the exposed portion remains as shown as in FIGS. 1 and 3. If the exposed portion is cut as far as where the electrode active material layers 6b, 8b overlap the current collectors 6a, 8a, the electrode active material layers 6b, 8b may be easily peeled off. By leaving the exposed portion, on the other hand, peeling of the electrode active material layers 6b, 8b can be suppressed.

Next, as shown in FIG. 2B, the end of the second electrode plate 8 in the second region R2 is bent in the radial direction B. Further, the end of the first electrode plate 6 in the second region R2 is also bent in the radial direction B. The method for bending the first electrode plate 6 and the second electrode plate 8 is not particularly limited. For example, the first electrode plate 6 and the second electrode plate 8 in the second region R2 can be bent by pressing a jig (not shown) having a plane perpendicular to the axial direction E against the end of the electrode group 2 in the axial direction E.

The jig may overlap the first region R1. Since the first electrode plate 6 and the second electrode plate 8 in the first region R1 are shorter than the first electrode plate 6 and the second electrode plate 8 in the second region R2, the first electrode plate 6 and the second electrode plate 8 in the first region R1 are not bent, or even if they are bent, the amount of bending is smaller than that in the second region R2, even if the jig overlaps the first region R1. Preferably, the depth of the recess 70 is set so that the first electrode plate 6 and the second electrode plate 8 in the first region R1 do not come into contact with the jig. Further, the dimension of the recess 70 in the radial direction B from the inner edge 68 is preferably equal to or greater than the depth of the recess 70. This can more properly inhibit the leading edge of the first electrode plate 6 or the second electrode plate 8 in the second region R2 from extending beyond the inner edge 68 and protruding to the side of the center of winding C side when the plates are bent.

Then, the end of the second electrode plate 8 bent in the second region R2 and the second current collector plate 22 are joined by laser welding or the like. Next, as shown in FIG. 4A, the electrode group 2 to which the second current collector plate 22 is joined is inserted into the outer can 4. The electrode group 2 is inserted into the outer can 4 from the side of the second current collector plate 22. As a result, the second current collector plate 22 and the bottom surface of the outer can 4 face each other. Then, a rod-shaped pressing tool 72 is inserted from the side of the opening of the outer can 4 into the central space of the electrode group 2, and the second current collector plate 22 is pressed against the bottom surface of the outer can 4 by the pressing tool 72. In this state, the second current collector plate 22 and the outer can 4 are joined by laser welding or the like.

Since the pressing tool 72 can create a state in which the second current collector plate 22 and the bottom surface of the outer can 4 are in intimate contact, the quality of joint between the second current collector plate 22 and the outer can 4 can be improved. Further, the electrode group 2 has the recess 70 adjacent to the pressing tool 72 at the end that faces the second current collector plate 22. This inhibits the bent end of the second electrode plate 8 from being sandwiched between the pressing tool 72 and the second current collector plate 22 when the pressing tool 72 is inserted into the central space of the electrode group 2. As a result, a state in which the second current collector plate 22 and the bottom surface of the outer can 4 are in intimate contact can be produced more stably.

Further, as described above, the electrode group 2 of this embodiment also has the recess 70 at the other end in the axial direction E, i.e., on the side of the opening of the outer can 4. This suppresses contact between the end of the first electrode plate 6 and the pressing tool 72, unintentional breakage of the first electrode plate 6, dust generation due to contact, etc., when the pressing tool 72 is inserted into the central space of the electrode group 2.

Next, as shown in FIG. 4B, the pressing tool 72 is extracted, and the end of the first electrode plate 6 bent in the second region R2 and the first current collector plate 20 are joined by laser welding or the like. Thereafter, as shown in FIG. 1, the first current collector plate 20 and the sealing plate 26 are joined. The electrolytic solution is poured into the outer can 4, and then the sealing plate 26 is fitted into the opening of the outer can 4 via the insulating gasket 24. Thereby, the battery 1 is obtained. In the case of a battery having a liquid pouring port, the electrolytic solution may be poured into the outer can 4 after a sealing member is fitted in the opening of the outer can 4.

As described above, the method of manufacturing the battery 1 according to this embodiment includes: preparing the electrode group 2 that has, in the first region R1 continuous from the inner edge 68 at one end (the end on the side where the second uncoated portion 14 protrudes) of the electrode group 2 in the axial direction E, the recess 70 in which the second electrode plate 8 is shorter than in the second region R2 located toward the outer edge; bending the end of the second electrode plate 8 in the second region R2 in the radial direction B and joining the bent end to the second current collector plate 22; inserting the electrode group 2 joined to the second current collector plate 22 into the outer can 4 and causing the second current collector plate 22 and the bottom surface of the outer can 4 to face each other; and inserting the pressing tool 72 into the central space of the electrode group 2 and pressing the second current collector plate 22 against the bottom surface to join the second current collector plate 22 to the outer can 4.

In an ordinary battery manufacturing process, a current collector plate is welded to one end of an electrode group, and, subsequently, the electrode group is inserted into an outer can from the side of the current collector, and the current collector plate and the bottom surface of the outer can are caused to face each other. Subsequently, a pressing tool is inserted into the central space of the electrode group to press the current collector plate against the bottom surface of the outer can to join the current collector plate and the bottom surface while they are in intimate contact. When the end of the electrode plate is bent in this manufacturing process to increase an area of joint between the electrode group and the current collector plate, the bent end may protrude into the central space in which the pressing tool 72 is inserted. When the electrode plate protrudes into the space, the electrode plate is sandwiched between the pressing tool 72 and the second current collector plate 22, causing the pressing of the second current collector plate 22 by the pressing tool 72 to become unstable and making it difficult to stably create a state in which the second current collector plate 22 and the bottom surface of the outer can 4 is intimate contact.

In contrast, the recess 70 is provided in the first region R1 continuous from the inner edge 68 in this embodiment. This inhibits the electrode plate from protruding into the central space in which the pressing tool 72 is inserted, even when the electrode plate is bent. Therefore, it is possible to create, more stably, a state in which the second current collector plate 22 and the bottom surface of the outer can 4 are in intimate contact. For this reason, the quality of joint between the second current collector plate 22 and the outer can 4 is improved, and the quality of the battery 1 is improved.

Further, the electrode group 2 of this embodiment also has the recess 70 at the other end in the axial direction E (the end on the side where the first uncoated portion 12 protrudes). This makes it easier to insert the pressing tool 72 into the central space of the electrode group 2. Further, the dimension of the recess 70 in the radial direction B from the inner edge 68 is equal to or greater than the depth (the dimension in the axial direction E) of the recess 70. This can more properly inhibit the bent electrode plate from protruding into the space of the electrode group 2. The embodiment further includes winding the first electrode plate 6 and the second electrode plate 8, in which the ends corresponding to the recess 70 are cut in advance, and the separator 10 to form the electrode group 2. This makes it easier to provide the recess 70 with respect to the electrode group 2. The embodiment further includes forming the recess 70 by cutting the exposed portions of the current collectors 6a, 8a and cutting the exposed portions so that the exposed portion remains. This suppresses peeling of the electrode active material layers 6b, 8b from the current collectors 6a, 8a.

The embodiments of the present disclosure are described above in detail. The embodiments described above are merely specific examples of practicing the present disclosure. The details of the embodiment shall not be construed as limiting the technical scope of the present disclosure. A number of design modifications such as modification, addition, deletion, etc. of constituting elements may be made to the extent that they do not depart from the idea of the invention defined by the claims. New embodiments with design modifications will provide the combined advantages of the embodiment and the variation. Although the details subject to such design modification are emphasized in the embodiment described above by using phrases such as "of this embodiment" and "in this embodiment", details not referred to as such are also subject to design modification. Any combination of constituting elements included in the respective embodiments is also useful as an embodiment of the present disclosure. Hatching in the cross section in the drawings should not be construed as limiting the material of the hatched object.

The embodiments may be defined by the following items.

### [ITEM 1]

A method of manufacturing a battery (1), including:
preparing an electrode group (2) having a winding structure in which a separator (10) and an electrode plate (6, 8) are stacked and wound, the electrode group (2) having, in a first region (R1) continuous from an inner edge (68) at one end of the electrode group (2) in an axial direction (E), a recess (70) in which the electrode plate (8) is shorter than in a second region (R2) located more toward an outer edge than the first region (R1);
bending an end of the electrode plate (8) in the second region (R2) in a radial direction (B) of the electrode group (2) and joining the bent end to a current collector plate (22) ;
inserting the electrode group (2) joined to the current collector plate (22) into an outer can (4) and causing the current collector plate (22) and a bottom surface of the outer can (4) to face each other; and
inserting a pressing tool (72) into a central space of the electrode group (2) and pressing the current collector plate (22) against the bottom surface to join the current collector plate (22) to the outer can (4).

### [ITEM 2]

The method of manufacturing a battery (1) according to ITEM 1,
wherein the electrode group (2) also has the recess (70) at the other end in the axial direction (E).

### [ITEM 3]

The method of manufacturing a battery (1) according to ITEM 1 or 2,
wherein a dimension of the recess (70) in the radial direction (B) from the inner edge (68) is equal to or greater than a depth of the recess (70).

### [ITEM 4]

The method of manufacturing a battery (1) according to any one of ITEMS 1 through 3, the method including:
winding the electrode plate (6, 8), in which an end corresponding to the recess (70) is cut in advance, and the separator (10) to form the electrode group (2).

### [ITEM 5]

The method of manufacturing a battery (1) according to any one of ITEMS 1 through 4,
wherein the electrode plate (6, 8) includes a current collector (6a, 8a) and an electrode active material layer (6b, 8b) stacked on the current collector (6a, 8a),
wherein the current collector (6a, 8a) includes, at one end in the axial direction (E), an exposed portion where the electrode active material layer (6b, 8b) is not stacked, and
the recess (70) is formed by cutting the exposed portion,
the method including:
   cutting the exposed portion so that the exposed portion remains.

### [ITEM 6]

A battery (1) including:
an electrode group (2) having a winding structure in which a separator (10) and an electrode plate (6, 8) are stacked and wound; and
a current collector plate (20, 22),
wherein the electrode group (2) has, in a first region (R1) continuous from an inner edge (68) at one end of the electrode group (2) in an axial direction (E), a recess (70) in which the electrode plate (6, 8) is shorter than in a second region (R2) located more toward an outer edge than the first region (R1), an end of the electrode plate (6, 8) in the second region (R2) is bent in a radial direction (B) of the electrode group (2), and the bent end is joined to the current collector plate (20, 22).

### INDUSTRIAL APPLICABILITY

The present disclosure is applicable to a method of manufacturing batteries and to batteries.

### REFERENCE SIGNS LIST

1 battery, 2 electrode group, 4 outer can, 6a current collector, 6b electrode active material layer, 8a current collector, 8b electrode active material layer, 10 separator, 68 inner edge, 70 recess, 72 pressing tool, R1 first region, R2 second region

## Claims

1. A method of manufacturing a battery, comprising:
preparing an electrode group having a winding structure in which a separator and an electrode plate are stacked and wound, the electrode group having, in a first region continuous from an inner edge at one end of the electrode group in an axial direction, a recess in which the electrode plate is shorter than in a second region located more toward an outer edge than the first region;
bending an end of the electrode plate in the second region in a radial direction of the electrode group and joining the bent end to a current collector plate;
inserting the electrode group joined to the current collector plate into an outer can and causing the current collector plate and a bottom surface of the outer can to face each other; and
inserting a pressing tool into a central space of the electrode group and pressing the current collector plate against the bottom surface to join the current collector plate to the outer can.

2. The method of manufacturing a battery according to claim 1,
wherein the electrode group also has the recess at the other end in the axial direction.

3. The method of manufacturing a battery according to claim 1 or 2,
wherein a dimension of the recess in the radial direction from the inner edge is equal to or greater than a depth of the recess.

4. The method of manufacturing a battery according to any one of claims 1 through 3, the method comprising:
winding the electrode plate, in which an end corresponding to the recess is cut in advance, and the separator to form the electrode group.

5. The method of manufacturing a battery according to any one of claims 1 through 4,
wherein the electrode plate includes a current collector and an electrode active material layer stacked on the current collector, and
wherein the current collector includes, at one end in the axial direction, an exposed portion where the electrode active material layer is not stacked, and
wherein the recess is formed by cutting the exposed portion,
the method including:
cutting the exposed portion so that the exposed portion remains.

6. A battery comprising:
an electrode group having a winding structure in which a separator and an electrode plate are stacked and wound; and
a current collector plate,
wherein the electrode group has, in a first region continuous from an inner edge at one end of the electrode group in an axial direction, a recess in which the electrode plate is shorter than in a second region located more toward an outer edge than the first region, an end of the electrode plate in the second region is bent in a radial direction of the electrode group, and the bent end is joined to the current collector plate.
